# EUROPÄISCHE PATENTSCHRIFT

(11) **EP 3 085 134 B1**
(45) Veröffentlichungstag und Bekanntmachung des Hinweises auf die Patenterteilung: **04.12.2019**
(21) Anmeldenummer: 14818879.0
(22) Anmeldetag: 17.12.2014
(51) Int. Cl.: H04W 12/08, H04W 12/12, H04W 8/18, H04W 8/20, H04W 88/06, H04L 29/06

(54) **VERFAHREN UND VORRICHTUNGEN ZUM VERWALTEN VON SUBSKRIPTIONEN AUF EINEM SICHERHEITSELEMENT**
METHOD AND APPARATUSES FOR MANAGING SUBSCRIPTIONS ON A SECURITY ELEMENT
PROCÉDÉ ET DISPOSITIFS DE GESTION DE SOUSCRIPTIONS SUR UN ÉLÉMENT DE SÉCURITÉ

(30) Priorität: 19.12.2013 DE 102013022029
(43) Veröffentlichungstag der Anmeldung: 26.10.2016
(73) Patentinhaber: Giesecke+Devrient Mobile Security GmbH, 81677 München (DE)
(72) Erfinder: JARNIK, Claus, 86949 Windach (DE); ECKARDT, Monika, 82291 Mammendorf (DE)
(86) Internationale Anmeldenummer: PCT/EP2014/003405
(87) Internationale Veröffentlichungsnummer: WO 2015/090586

(56) Entgegenhaltungen:
- DE-A1-102008 025 792
- US-A1- 2005 164 737

## Beschreibung

### Gebiet der Erfindung

Die Erfindung betrifft die Kommunikation über Mobilfunknetze im Allgemeinen und insbesondere Verfahren und Vorrichtungen zum Verwalten von Subskriptionen auf einem Sicherheitselement, wie beispielsweise einem SIM, einer eUICC/UICC oder dergleichen, zum Einbuchen in ein Mobilfunknetz.

### Hintergrund der Erfindung

Das Kommunizieren mittels eines mobilen Endgeräts, beispielsweise einem Mobiltelefon, über ein Mobilfunknetzwerk (auch als PLMN [Public Land Mobile Network] bezeichnet), das von einem Netzbetreiber (auch als MNO [Mobile Network Operator] bezeichnet) betrieben wird, erfordert in der Regel, dass das mobile Endgerät mit einem Sicherheitselement zum sicheren Speichern von Daten ausgestattet ist, die den Benutzer des mobilen Endgeräts gegenüber dem Mobilfunknetzwerk eindeutig identifizieren. Beispielsweise kommt bei einem mobilen Endgerät, das dazu ausgestaltet ist, gemäß dem GSM-Standard (Global System for Mobile Communications) zu kommunizieren, bei dem es sich zur Zeit um einen der am weitesten verbreiteten Mobilfunkstandards handelt, ein Sicherheitselement mit dem Namen SIM (Subscriber Identity Module) üblicherweise in Form einer Chipkarte bzw. Smartcard zum Einsatz. Gemäß dem GSM-Standard, dessen technische Merkmale in einer Vielzahl von miteinander verknüpften und voneinander abhängigen Spezifikationen definiert werden, enthält die SIM-Karte Subskriptionsberechtigungsdaten ("Subscription Credentials") zum Identifizieren und Authentisieren des Benutzers bzw. Teilnehmers, einschließlich einer IMSI (International Mobile Subscriber Identity) und eines Authentisierungsschlüssels Kᵢ. Bevor einem Teilnehmer seine SIM-Karte zur Verfügung gestellt wird, werden diese Subskriptionsberechtigungsdaten üblicherweise vom SIM-Karten-Hersteller oder dem Netzbetreiber im Rahmen eines Personalisierungsprozesses als Teil einer Subskription (auch Subskriptionsprofil genannt) auf der SIM-Karte sicher hinterlegt. Eine nicht-personalisierte SIM-Karte ist im Allgemeinen nicht für die bestimmungsgemäße Verwendung in einem mobilen Endgerät geeignet, d.h. es ist nicht möglich mit einer nicht-personalisierten SIM-Karte ohne eine Subskription auf ein Mobilfunknetzwerk zuzugreifen.

Ein bestimmtes Anwendungsgebiet von Sicherheitselementen, wie SIM-Karten, UICCs, eUICCS und dergleichen, das aller Voraussicht nach in der nahen Zukunft beträchtlich wachsen wird, ist die M2M-Kommunikation ("machine-to-machine communication"), d.h. die Kommunikation zwischen Maschinen über ein Mobilfunknetz ohne menschliche Interaktion. Bei der M2M-Kommunikation können Daten automatisch zwischen zahlreichen unterschiedlichen Maschinenarten ausgetauscht werden, die mit einem Sicherheitselement in Form eines M2M-Moduls ausgestattet sind, beispielsweise TV-Systeme, Set-Top-Boxen, Verkaufsautomaten, Fahrzeuge, Verkehrsampeln, Überwachungskameras, Sensorvorrichtungen und dergleichen. Es ist abzusehen, dass zumindest bei einigen derartiger Vorrichtungen es unmöglich oder zumindest sehr schwierig sein wird, das Sicherheitselement bereits bei der Herstellung mit einer Subskription zu versehen. Dies liegt insbesondere daran, dass in vielen M2M-Vorrichtungen das Sicherheitselement in Form eines oberflächenmontiertes Chips (surface mounted chip) oder Chipmoduls implementiert wird und zu diesem Zeitpunkt beispielsweise nicht klar ist, in welchem Land der Erde eine bestimmte M2M-Vorrichtung zum Einsatz kommen wird. Folglich ist es bei solchen M2M-Vorrichtungen mit nicht-personalisierten Sicherheitselementen erforderlich, dass diese erst beim Einsatz im Feld über die Luftschnittstelle mit einer Subskription versehen werden können.

Für die Inanspruchnahme der von einem Mobilfunknetzbetreiber bereitgestellten Dienste, insbesondere das Kommunizieren über das entsprechende Mobilfunknetzwerk, muss der Benutzer eines mobilen Endgeräts in der Regel eine monatliche Gebühr zahlen. Falls der Benutzer beispielsweise aufgrund von niedrigeren monatlichen Gebühren und/oder besseren Diensten zu einem anderen Mobilfunknetzbetreiber wechseln möchte, muss dieser üblicherweise manuell die vom bisherigen Mobilfunknetzbetreiber bereitgestellte SIM-Karte mit der Subskription zur Nutzung des Mobilfunknetzes des bisherigen Mobilfunknetzbetreibers durch eine vom neuen Mobilfunknetzbetreiber bereitgestellte SIM-Karte mit einer Subskription zur Nutzung des Mobilfunknetzes des neuen Mobilfunknetzbetreibers ersetzen. Anstatt dieser herkömmlichen Vorgehensweise wäre es für den Benutzer ohne Frage einfacher und bequemer, ein Sicherheitselement zu haben, das über die Luftschnittstelle mittels einer neuen Subskription "umprogrammiert" werden kann.

Derartige Verfahren zum Herunterladen einer Subskription über die Luftschnittstelle von einer Serverinstanz auf ein Sicherheitselement sind prinzipiell aus dem Stand der Technik bekannt. Bei diesen herkömmlichen Verfahren besteht jedoch das Problem, dass ein Netzbetreiber, der eine Subskription auf ein Sicherheitselement herunterlädt, in der Regel keine Möglichkeit dazu hat, zu erkennen, geschweige denn zu bestimmen, neben welchen weiteren Subskriptionen auf dem Sicherheitselement seine Subskription eingesetzt wird bzw. eingesetzt werden kann, was in bestimmten Fällen wünschenswert wäre.

Weiterhin geht aus der DE 10 2008 025 792 A1 ein Verfahren zur Inbetriebnahme und Personalisierung eines weiteren zweiten, noch nicht personalisierten Teilnehmeridentifizierungsmoduls (SIM) für den Betrieb eines Mobilfunkendgerätes hervor. Dieses Dokument basiert auf der Annahme, dass mit einem ersten Teilnehmeridentifizierungsmodul geprüft wird, ob das zweite Teilnehmeridentifizierungsmodul bereits einmal verwendet worden ist oder nicht.

Vor diesem Hintergrund stellt sich der vorliegenden Erfindung die Aufgabe, verbesserte Verfahren und Vorrichtungen zum Verwalten einer Vielzahl von Subskriptionen auf einem Sicherheitselement zum Einbuchen in ein jeweiliges Mobilfunknetz bereitzustellen, mit denen die vorstehend beschriebenen Nachteile zumindest teilweise behoben werden können.

### Zusammenfassung der Erfindung

Die vorstehende Aufgabe wird gemäß der vorliegenden Erfindung durch den jeweiligen Gegenstand der unabhängigen Ansprüche gelöst. Bevorzugte Ausgestaltungen der Erfindung werden in den abhängigen Ansprüchen definiert.

Gemäß einem ersten Aspekt der Erfindung wird ein Verfahren zum Verwalten einer Vielzahl von Subskriptionen mit Subskriptionsberechtigungsdaten auf einem Sicherheitselement eines mobilen Endgeräts zum Einbuchen in ein jeweiliges Mobilfunknetz bereitgestellt. Dabei weist das Sicherheitselement eine Vielzahl von Speicherplätzen zum Speichern der Vielzahl von Subskriptionen auf, wobei die Vielzahl von Subskriptionen eine Primärsubskription und wenigstens eine Sekundärsubskription umfasst. Dabei ist in der Primärsubskription ein Satz von Regeln hinterlegt, der bestimmt, ob die wenigstens eine Sekundärsubskription auf dem Sicherheitselement eingesetzt werden kann.

Eine Primärsubskription im Sinne der Erfindung erlaubt ebenso wie eine herkömmliche Subskription die Kommunikation über ein Mobilfunknetz, umfasst also als Teil der Subskriptionsberechtigungsdaten beispielsweise eine IMSI und/oder einen Authentisierungsschlüssel Ki. Erfindungsgemäß umfasst eine Primärsubskription jedoch ferner einen Satz von Regeln, mit dem beeinflusst werden kann, welche weiteren Subskriptionen auf dem Sicherheitselement verwendet werden können, die hierin als Sekundärsubskriptionen bezeichnet werden. Eine Sekundärsubskription im Sinne der Erfindung entspricht somit im Wesentlichen einer herkömmlichen Subskription, mit Subskriptionsberechtigungsdaten, die es ermöglichen, mit dem Sicherheitselement des mobilen Endgeräts über ein Mobilfunknetz zu kommunizieren.

Vorzugsweise umfasst die Primärsubskription neben den Subskriptionsberechtigungsdaten und dem Satz von Regeln ferner wenigstens eine Applikation und/oder wenigstens einen Datensatz, wobei der in der Primärsubksription hinterlegte Satz von Regeln ferner bestimmt, ob die wenigstens eine Sekundärsubskription auf die wenigstens eine Applikation oder den wenigstens einen Datensatz der Primärsubskription zugreifen darf.

Gemäß einer Alternative des ersten Aspekts stellt die Erfindung ein Verfahren zum Verwalten einer Vielzahl von Subskriptionen mit Subskriptionsberechtigungsdaten auf einem Sicherheitselement eines mobilen Endgeräts zum Einbuchen in ein jeweiliges Mobilfunknetz bereit. Dabei weist das Sicherheitselement eine Vielzahl von Speicherplätzen zum Speichern der Vielzahl von Subskriptionen auf, wobei die Vielzahl von Subskriptionen eine Primärsubskription und wenigstens eine Sekundärsubskription umfasst. Dabei umfasst die Primärsubskription neben den Subskriptionsberechtigungsdaten wenigstens eine Applikation und/oder wenigstens einen Datensatz sowie einen Satz von Regeln, der bestimmt, ob die wenigstens eine Sekundärsubskription auf die wenigstens eine Applikation oder den wenigstens einen Datensatz der Primärsubskription zugreifen darf.

Vorzugsweise kann neben der Primärsubskription keine weitere Primärsubskription auf dem Sicherheitselement eingesetzt werden, wobei der in der Primärsubskription hinterlegte Satz von Regeln bestimmt, dass nur Sekundärsubskriptionen von bestimmten Netzbetreibern auf dem Sicherheitselement eingesetzt werden können.

Gemäß bevorzugter Ausführungsformen der Erfindung umfassen die Vielzahl von Subskriptionen wenigstens zwei Sekundärsubskriptionen und der in der Primärsubskription hinterlegte Satz von Regeln bestimmt, ob die Kombination der wenigstens zwei Sekundärsubskriptionen auf dem Sicherheitselement eingesetzt werden kann.

Vorzugsweise kann neben der Primärsubskription wenigstens eine weitere Primärsubskription auf dem Sicherheitselement eingesetzt werden und die Vielzahl von Subskriptionen umfassen wenigstens zwei Sekundärsubskriptionen, wobei der in der Primärsubskription hinterlegte Satz von Regeln nur für einen Teil der wenigstens zwei Sekundärsubskriptionen gilt und in der weiteren Primärsubskription ein Satz von Regeln hinterlegt ist, der bestimmt, ob eine Sekundärsubskription des anderen Teils der wenigstens zwei Sekundärsubskriptionen auf dem Sicherheitselement eingesetzt werden kann.

Gemäß einem zweiten Aspekt der Erfindung wird ein Sicherheitselement für ein mobiles Endgerät mit einer Vielzahl von Speicherplätzen zum Speichern einer Vielzahl von Subskriptionen mit Subskriptionsberechtigungsdaten zum Einbuchen in ein jeweiliges Mobilfunknetz bereitgestellt. Dabei umfasst die Vielzahl von Subskriptionen eine Primärsubskription und wenigstens eine Sekundärsubskription, wobei in der Primärsubskription ein Satz von Regeln hinterlegt ist, der bestimmt, ob die wenigstens eine Sekundärsubskription auf dem Sicherheitselement eingesetzt werden kann.

Vorzugsweise umfasst die Primärsubskription neben den Subskriptionsberechtigungsdaten und dem Satz von Regeln ferner wenigstens eine Applikation und/ oder wenigstens einen Datensatz, wobei der in der Primärsubksription hinterlegte Satz von Regeln ferner bestimmt, ob die wenigstens eine Sekundärsubskription auf die wenigstens eine Applikation oder den wenigstens einen Datensatz der Primärsubskription zugreifen darf.

Gemäß einer Alternative des zweiten Aspekts stellt die Erfindung ein Sicherheitselement für ein mobiles Endgerät mit einer Vielzahl von Speicherplätzen zum Speichern einer Vielzahl von Subskriptionen mit Subskriptionsberechtigungsdaten zum Einbuchen in ein jeweiliges Mobilfunknetz bereit. Dabei umfasst die Vielzahl von Subskriptionen eine Primärsubskription und wenigstens eine Sekundärsubskription. Dabei umfasst die Primärsubskription neben den Subskriptionsberechtigungsdaten wenigstens eine Applikation und/oder wenigstens einen Datensatz sowie einen Satz von Regeln, der bestimmt, ob die wenigstens eine Sekundärsubskription auf die wenigstens eine Applikation oder den wenigstens einen Datensatz der Primärsubskription zugreifen darf.

Vorzugsweise ist das Sicherheitselement derart ausgestaltet, dass neben der Primärsubskription keine weitere Primärsubskription auf dem Sicherheitselement eingesetzt werden kann und dass der in der Primärsubskription hinterlegte Satz von Regeln bestimmt, dass nur Sekundärsubskriptionen von bestimmten Netzbetreibern auf dem Sicherheitselement eingesetzt werden können.

Gemäß bevorzugter Ausführungsformen der Erfindung ist das Sicherheitselement derart ausgestaltet, dass die Vielzahl von Subskriptionen wenigstens zwei Sekundärsubskriptionen umfassen und der in der Primärsubskription hinterlegte Satz von Regeln bestimmt, ob die Kombination der wenigstens zwei Sekundärsubskriptionen auf dem Sicherheitselement eingesetzt werden kann.

Vorzugsweise ist das Sicherheitselement derart ausgestaltet, dass neben der Primärsubskription wenigstens eine weitere Primärsubskription auf dem Sicherheitselement eingesetzt werden kann und die Vielzahl von Subskriptionen wenigstens zwei Sekundärsubskriptionen umfassen, wobei der in der Primärsubskription hinterlegte Satz von Regeln nur für einen Teil der wenigstens zwei Sekundärsubskriptionen gilt und in der weiteren Primärsubskription ein Satz von Regeln hinterlegt ist, der bestimmt, ob eine Sekundärsubskription des anderen Teils der wenigstens zwei Sekundärsubskriptionen auf dem Sicherheitselement eingesetzt werden kann.

Bei einem erfindungsgemäßen Sicherheitselement handelt es sich beispielsweise um einen in Hardware ausgestalteten Datenträger. Das Sicherheitselement ist beispielsweise als ein fest integrierter Bestandteil in einem Endgerät angeordnet, wobei es entweder in der Form nicht vom Endgerät entnommen werden kann, beispielsweise als Teilnehmeridentifikationsmodul, M2M-Modul, Co-Prozessor, Trusted Base, Trusted Platform Module. Alternativ ist das Sicherheitselement als ein entnehmbares Modul mit dem mobilen Endgerät verbunden, beispielsweise als Chipkarte, insbesondere als Teilnehmeridentifikationsmodul, Smart Card, Massenspeicherkarte, USB-Token, Multimediakarte, Secure MicroSD-Karte, Mobilfunknetztoken, z.B. ein UMTS-Surfstick und/oder als elektronisches Identitätsdokument, beispielsweise als elektronischer Personalausweis beziehungsweise Reisepass mit in einem Speicherbereich abgelegten maschinenlesbaren Identifikationsdaten einer Person.

Gemäß einer weiteren Alternative kann das Sicherheitselement als eine Kombination aus Hard- und Softwarekomponenten in einem vertrauenswürdigen Teil eines Betriebssystems des Endgeräts ausgebildet sein, die dem Fachmann auch als gesicherte Laufzeitumgebung ("Trusted Execution Environment"; TEE) bekannt ist. Das Sicherheitselement kann dann beispielsweise innerhalb einer solchen gesicherten Laufzeitumgebung in Form von darin ablaufenden Programmen, sogenannten Trustlets ausgebildet sein.

Bei dem Sicherheitselement kann es sich grundsätzlich um einen in Baugröße und Ressourcenumfang reduzierten Computer handeln, der einen Prozessor und mindestens eine Schnittstelle zur Kommunikation mit einem externen Gerät aufweist. Häufig besitzt er keine oder nur eine rudimentäre eigene Nutzerdatenausgabe. Das Sicherheitselement weist insbesondere einen Datenspeicher zum Ablegen von Daten, Informationen, Dateien und/oder Applikationen mit dazugehörigen Variablen ab, wobei Bereiche des Datenspeichers flüchtig oder nicht-flüchtig sein können. Der nichtflüchtige Datenspeicher kann insbesondere permanent, beispielsweise als ein Read-Only-Memory, kurz ROM oder semi-permanent sein, beispielsweise als ein Electrically-Erasable-Programmable-Read-Only-Memory, kurz EEPROM, Flashspeicher, Ferroelectric Random Access Memory, kurz FRAM bzw. FeRAM-Speicher oder Magnetoresistive Random Access Memory, kurz MRAM-Speicher.

Wie der Fachmann erkennt, lassen sich die vorstehend beschriebenen bevorzugten Ausgestaltungen sowohl im Rahmen des ersten Aspekts der Erfindung, d.h. im Rahmen des Verfahrens zum Verwalten einer Vielzahl von Subskriptionen auf einem Sicherheitselement, als auch im Rahmen des zweiten Aspekts der Erfindung, d.h. im Rahmen eines solchen Sicherheitselements, vorteilhaft implementieren.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig. 1: eine schematische Darstellung eines Kommunikationssystems mit einem Sicherheitselement in Form einer eUICC, die unterschiedliche Aspekte der vorliegenden Erfindung illustriert, und
- Fig. 2: eine schematische Darstellung eines bevorzugten Ablaufs beim Verwalten von Subskriptionen auf dem Sicherheitselement von Figur 1.

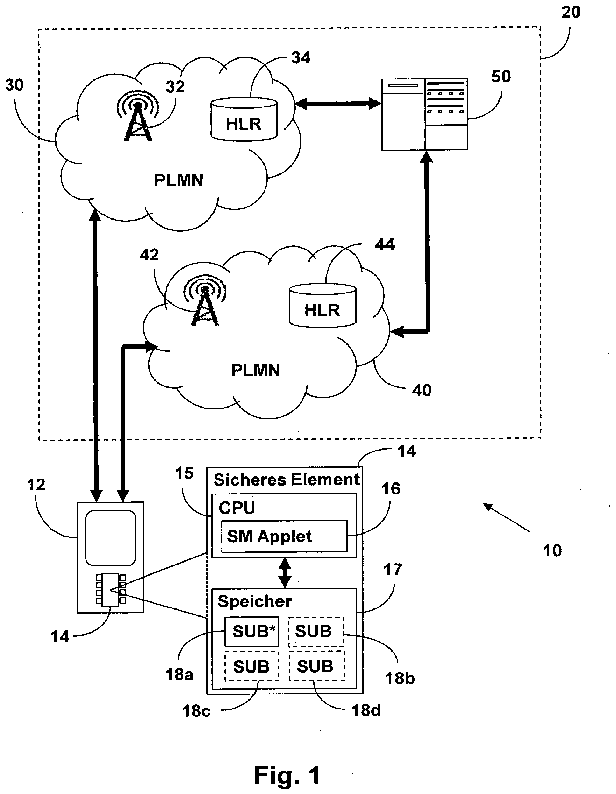

Figur 1 zeigt eine schematische Darstellung der Komponenten eines Kommunikationssystems 10 sowie einige der Kommunikationsverbindungen zwischen diesen Komponenten, das unterschiedliche Aspekte der vorliegenden Erfindung illustriert. Obgleich in der nachstehenden detaillierten Beschreibung auf ein "mobiles" Endgerät Bezug genommen wird, wird der Fachmann erkennen, dass die vorliegende Erfindung vorteilhaft im Zusammenhang mit jeder Art von Endgerät implementiert werden kann, das dazu ausgestaltet ist, über ein mobiles oder zelluläres Kommunikationsnetzwerk zu kommunizieren, also auch mit Endgeräten, deren Standort sich praktisch nicht ändert. Mit anderen Worten: das hierein verwendete Attribut "mobil" bezieht sich auf die Fähigkeit des Endgeräts über ein mobiles oder zelluläres Kommunikationsnetzwerk zu kommunizieren, einschließlich IP-basierte Kommunikationsnetzwerke.

Ein beispielhaftes mobiles Endgerät 12 ist in Figur 1 dargestellt, das ein Sicherheitselement ("Secure Element") 14 zum sicheren Speichern und Verarbeiten von Daten umfasst, die beispielsweise das mobile Endgerät 12 und/oder dessen Benutzer eindeutig identifizieren. Wie dies in Figur 1 angedeutet ist, handelt es sich bei dem mobilen Endgerät 12 vorzugsweise um ein Mobiltelefon, ein Smartphone oder eine ähnliche Vorrichtung. Der Fachmann wird jedoch erkennen, dass das mobile Endgerät 12 gemäß der vorliegenden Erfindung ebenfalls in Form von anderen Vorrichtungen implementiert werden kann, die dazu eingerichtet sind, über ein Mobilfunknetzwerk zu kommunizieren, wie beispielsweise ein Tablett-Computer, ein Notebook, ein TV-System, eine Set-Top-Box, ein Verkaufsautomat, ein Kraftfahrzeug, eine Überwachungskamera, eine Sensorvorrichtung und dergleichen.

Gemäß bevorzugter Ausführungsformen der Erfindung ist das Sicherheitselement 14 als eine eUICC (embedded Universal Integrated Circuit Card) mit einer darauf implementierten SIM-Applikation ausgestaltet, d.h. als ein Sicherheitselement, das fester Bestandteil des mobilen Endgeräts 12 ist und in einem Mobilfunknetzwerk für die eindeutige und sichere Identifizierung des Benutzers bzw. Teilnehmers und für die Bereitstellung unterschiedlicher Funktionen und Mehrwertdienste verwendet wird. Alternativ kann das Sicherheitselement 14 als eine UICC (Universal Integrated Circuit Card) oder SIM-Karte (Subscriber Identity Module) ausgestaltet sein, die dem Fachmann als eine der zurzeit am häufigsten verwendeten Formen eines Sicherheitselements bekannt ist. Der Fachmann wird jedoch erkennen, dass andere Arten von Sicherheitselementen, die je nach Generation und Typ des zugrunde liegenden Mobilfunkstandards als USIM, R-UIM, ISIM und dergleichen bezeichnet werden, ebenfalls von der vorliegenden Erfindung umfasst werden.

Gemäß weiterer bevorzugter Ausführungsformen der Erfindung kann das Sicherheitselement 14 als eine Kombination aus Hard- und Softwarekomponenten in einem vertrauenswürdigen Teil eines Betriebssystems einer zentralen Prozessoreinheit des mobilen Endgeräts 12 ausgebildet sein, die dem Fachmann auch als gesicherte Laufzeitumgebung ("Trusted Execution Environment"; TEE) bekannt ist. Das Sicherheitselement 14 kann dann beispielsweise innerhalb einer solchen gesicherten Laufzeitumgebung des mobilen Endgeräts 12 in Form von darin ablaufenden Programmen, sogenannten Trustlets® ausgebildet sein.

Das mobile Endgerät 12 ist dazu ausgestaltet, über die Luftschnittstelle mit einem Mobilfunknetzwerk (auch kurz als "Mobilfunknetz" oder als "Public Land Mobile Network" [PLMN] bezeichnet) eines Mobilfunksystems 20 zu kommunizieren. In Figur 1 sind beispielhaft die Mobilfunknetze 30 und 40 dargestellt. Dabei ist es denkbar, dass das Mobilfunknetz 30 von einem ersten Mobilfunknetzbetreiber (auch als "Mobile Network Operator" oder MNO bezeichnet) und das zweite Mobilfunknetz 40 von einem zweiten Mobilfunknetzbetreiber betrieben wird. Gemäß bevorzugter Ausführungsformen der Erfindung werden das Mobilfunknetz 30 und/oder das Mobilfunknetz 40 gemäß dem GSM-Standard ("Global Standard for Mobile Communications") betrieben.

Nachstehend werden bevorzugte Ausführungsformen der Erfindung im Zusammenhang mit Mobilfunknetzwerken 30, 40 als Teil des Mobilfunksystems 20 gemäß dem GSM-Standard beschrieben, der in einer Vielzahl von ETSI-Spezifikationen spezifiziert ist. Der Fachmann wird jedoch erkennen, dass die vorliegende Erfindung auch im Zusammenhang mit anderen Mobilfunknetzen vorteilhaft eingesetzt werden kann. Derartige Netze umfassen Mobilfunknetze der dritten Generation (3GPP), wie UMTS (Universal Mobile Telecommunications System), Mobilfunknetze der vierten Generation (4G), wie LTE (Long Term Evolution), sowie andere Mobilfunknetze, wie CDMA und dergleichen.

Wie dies dem Fachmann bekannt ist, umfasst ein gemäß dem GSM-Standard aufgebautes Mobilfunknetz bzw. PLMN im Allgemeinen ein BSS ("Base Station Subsystem"), das aus einer Vielzahl von BTS ("Base Transceiver Station") besteht, die jeweilige Funkzellen des PLMN definieren und mit einem BSC ("Base Station Controller") verbunden sind. Üblicherweise handelt es sich bei dem BSC um einen einer Vielzahl von BSC, die mit einem gemeinsamen MSC ("Mobile Switching Center") kommunizieren. Häufig ist eine lokale Datenbank, die VLR ("Visitor Location Register") genannt wird, Teil des MSC, um Informationen über die Mobilfunkteilnehmer vorzuhalten, die sich momentan in den Funkzellen befinden, die von einem MSC versorgt werden (d.h. der von einem MSC abgedeckte Bereich). Das MSC stellt im Wesentlichen dieselbe Funktionalität wie eine Vermittlungsstelle im Festnetz (publicswitched telephone network; PSTN) bereit und steht in Kommunikation mit einem HLR ("Home Location Register"), bei dem es sich um die primäre Datenbank des PLMN handelt, in der Informationen zur Anmeldung bzw. Authentisierung der Mobilfunkteilnehmer gespeichert sind. Hierzu hat das HLR üblicherweise Zugriff auf ein AUC ("Authentication Center"). Wie dies dem Fachmann bekannt ist, können die Kommunikationsverbindungen zwischen den vorstehend beschriebenen Komponenten eines PLMNs auf proprietären und/oder offenen Standards basieren. Die verwendeten Protokolle können beispielsweise SS7- oder IP-basiert sein. Wie die Netzwerckomponenten als separate oder zusammengefasste Einheiten ausgebildet sind und wie die Schnittstellen zwischen diesen Komponenten ausgebildet sind, ist Sache des MNO, so dass die vorstehende Beschreibung lediglich als beispielhaft zu verstehen ist.

Der Fachmann wird erkennen, dass, obgleich die vorstehend beschriebenen Funktionseinheiten eines herkömmlichen Mobilfunknetzes gemäß dem GSM-Standard in anderen oder zukünftigen Mobilfunkstandards andere Namen aufweisen können, die zugrundeliegenden Prinzipien im Wesentlichen gleich sind und diese daher von der Erfindung ebenfalls umfasst werden.

Der Übersichtlichkeit halber sind von den vorstehend beschriebenen Komponenten eines Mobilfunknetzes lediglich die folgenden in der schematischen Darstellung von Figur 1 gezeigt: ein beispielhaftes BTS 32 sowie ein HLR 34 für das Mobilfunknetz 30 sowie ein beispielhaftes BTS 42 sowie ein HLR 44 für das Mobilfunknetz 40. Wie sich dies Figur 1 entnehmen lässt, stehen das Mobilfunknetz 30 und das Mobilfunknetz 40 zumindest zeitweise in Kommunikation mit einem Hintergrundsystem 50, vorzugsweise in Form eines geeignet ausgestalteten Servers, wie dies nachstehend im Detail beschrieben wird. Das Mobilfunknetz 30 und/oder das Mobilfunknetz 40 können neben weiteren dem Fachmann bekannte Funktionseinheiten beispielsweise jeweils ein SMS-C ("Short Message Service Center") zum Speichern, Weiterleiten, Konvertieren und Zustellen von SMS-Nachrichten aufweisen, mittels derer beispielsweise Daten vom Hintergrundsystem 50 an das Sicherheitselement 14 des mobilen Endgeräts 12 übertragen werden können.

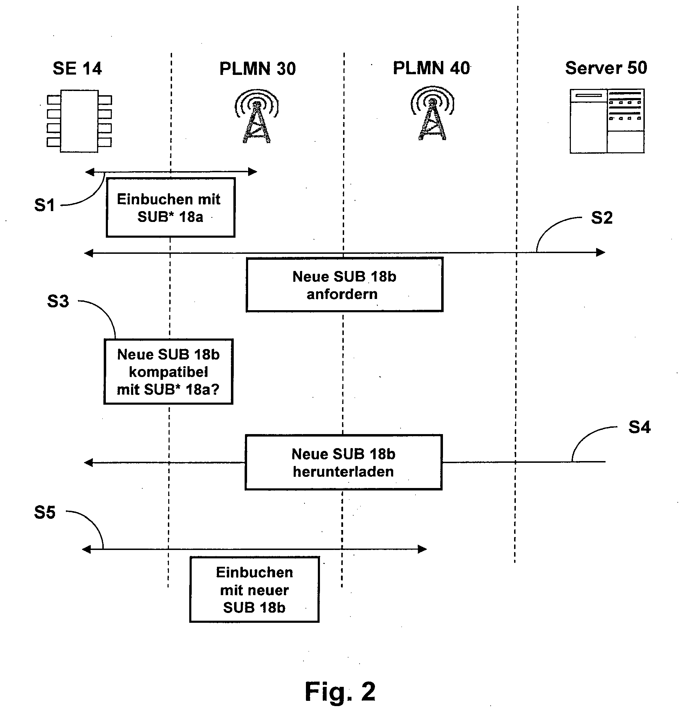

Wie sich dies der vergrößerten Ansicht des Sicherheitselements 14 in Figur 1 entnehmen lässt, umfasst das Sicherheitselement 14 vorzugsweise eine zentrale Verarbeitungseinheit bzw. einen zentralen Prozessor ("central processing unit"; CPU) 15. Vorzugsweise ist der Prozessor 15 derart ausgestattet, dass Applikationen auf dem Prozessor 15 ausgeführt werden können, wie beispielsweise eine Subskriptionsverwaltungsapplikation ("subscription management applet"; SM Applet), die vorzugsweise zumindest einige der Features zum Verwalten von Subskriptionen auf dem Sicherheitselement 14 bereitstellt, wie dies nachstehend im Zusammenhang mit der Figur 2 detailliert beschrieben wird. Vorzugsweise ist die Subskriptionsverwaltungsapplikation 16 in Form eines Java Applets implementiert. Zur Bereitstellung einer entsprechenden Ausführungsumgebung für das SM Applet 16 kann vorzugsweise ein sicheres Betriebssystem (nicht in Figur 1 gezeigt) auf dem Prozessor 15 implementiert sein.

Das Sicherheitselement 14 umfasst vorzugsweise ferner eine Speichereinheit 17, die vorzugsweise als eine nicht-flüchtige, wiederbeschreibbare Speichereinheit, z.B. in Form eines Flash-Speichers, implementiert ist. Wie sich dies Figur 1 entnehmen lässt, ist eine erste Subskription 18a (SUB*) in der Speichereinheit 17 des Sicherheitselements 14 gespeichert. Vorzugsweise enthält die erste Subskription 18a Daten, die es dem Sicherheitselement 14 und dem mobilen Endgerät 12 ermöglichen, sich in das Mobilfunknetz 30 einzubuchen und über dieses zu kommunizieren, d.h. insbesondere Subskriptionsberechtigungsdaten ("Subscription Credentials")sowie unter Umständen einen MNO-spezifischen Authentisierungsalgorithmus und dergleichen. Vorzugsweise sind zumindest Teile der Speichereinheit 17 des Sicherheitselements 14 dazu ausgestaltet, sicher die Daten darin zu speichern, beispielsweise die geheimzuhaltenden Subskriptionsberechtigungsdaten, wie eine IMSI ("International Mobile Subscriber Identity") oder ein Authentisierungsschlüssel Ki, die Teil der Subskription 18a sind.

Wie dies in Figur 1 angedeutet ist, weist die Speichereinheit 17 vorzugsweise wenigstens drei weitere "Slots" zum Unterbringen zusätzlicher Subskriptionen auf, wie beispielsweise zum Unterbringen der in Figur 1 dargestellten weiteren Subskription 18b-d.

Bei der in Figur 1 dargestellten bevorzugten Ausführungsform ist erfindungsgemäß vorgesehen, dass es sich bei der auf dem Sicherheitselement 14 vorliegenden Subskription 18a um eine Primärsubskription handelt, was durch das Sternchen angedeutet sein soll. Eine Primärsubskription im Sinne der Erfindung erlaubt ebenso wie eine herkömmliche Subskription die Kommunikation über ein Mobilfunknetz, umfasst also Subskriptionsberechtigungsdaten, beispielsweise eine IMSI und/oder einen Authentisierungsschlüssel Ki. Erfindungsgemäß umfasst eine Primärsubskription jedoch ferner einen Satz von Regeln, mit dem beeinflusst werden kann, welche weiteren Subskriptionen auf dem Sicherheitselement 14 verwendet werden können, die hierin als Sekundärsubskriptionen bezeichnet werden. Eine Sekundärsubskription im Sinne der Erfindung entspricht somit im Wesentlichen einer herkömmlichen Subskription, d.h. umfasst insbesondere Subskriptionsberechtigungsdaten, die es ermöglichen, mit dem Sicherheitselement 14 des mobilen Endgeräts 12 über ein Mobilfunknetz zu kommunizieren.

Gemäß bevorzugter oder alternativer Ausführungsformen der Erfindung kann die Primärsubskription neben den Subskriptionsberechtigungsdaten eine Applikation und/oder wenigstens einen Datensatz umfassen, wobei der in der Primärsubksription hinterlegte Satz von Regeln zusätzliche oder alternativ bestimmt, ob eine Sekundärsubskription auf die Applikation oder den wenigstens einen Datensatz der Primärsubskription zugreifen darf. Ein besonderer Vorteil dieser bevorzugten oder alternativen Ausführungsformen der Erfinduing liegt darin, dass ein Mobilfunknetzbetreiber z.B. eine Standardapplikation, z.B. einen MNO-spezifischen Authentisierungsalgorithmus, und/oder einen Standarddatensatz, nur in seiner Primärsubskription vorsehen muss, um mit dem darin hinterlegten Satz von Regeln zu definieren, welche Sekundärsubskriptionen des Mobilfunknetzbetreibers Zugriff auf diese Standardapplikation und/oder diesen Standarddatensatz haben sollen.

Die Funktionsweise des Hintergrundsystems 50 in Verbindung mit den anderen Elementen des in Figur 1 dargestellten Kommunikationssystems 10 wird nun im Zusammenhang mit einer bevorzugten Ausführungsform der Erfindung unter weiterer Bezugnahme auf die Figur 2 beschrieben.

Im Schritt S1 von Figur 2 bucht sich das Sicherheitselement 14 mit der Primärsubskription 18a in das PLMN 30 ein. Dieser Schritt beinhaltet in der Regel eine Authentisierung des Sicherheitselements 14 gegenüber dem PLMN 30, und zwar beispielsweise unter Verwendung einer IMSI und/oder eines Authentisierungsschlüssels Kᵢ, die Teil der Primärsubskription 18a sind. Es ist denkbar, dass die Primärsubskription 18a bereits im Rahmen der Herstellung und/oder der Personalisierung des mobile Endgeräts 12 und/oder des Sicherheitselements 14 in der Speichereinheit 17 des Sicherheitselements 14 hinterlegt worden ist. Gemäß einer erfindungsgemäßen Variante ist es ebenfalls denkbar, dass die Primärsubskription 18a OTA auf dem Sicherheitselement 14 bereitgestellt wird, wenn sich das mobile Endgerät 12 und das Sicherheitselement 14 bereits im Feld verwendet werden. Bei dieser Variante ist denkbar, dass bei der Herstellung bzw. Personalisierung nur eine vorläufige Subskription ("provisional subscription") auf dem Sicherheitselement 14 hinterlegt wird, die es dem Benutzer des mobilen Endgeräts 12 ermöglicht, eine vollständige Subskription, beispielsweise die Primärsubskription 18a, auf dem Sicherheitselement 14 zu installieren.

Sobald sich das Sicherheitselement 14 in Schritt S1 mit der Primärsubskription 18a in das PLMN 30 eingebucht hat, kann dieses über das PLMN 30 mit dem Hintergrundsystem 50 kommunizieren. Im Rahmen dieser Kommunikation kann das Sicherheitselement 14 in Schritt S2 von Figur 2 eine neue Subskription in Form einer Sekundärsubskription 18b anfordern, um mit dieser Sekundärsubskription 18b auch über das PLMN 40 kommunizieren zu können.

Erfindungsgemäß wird nun vorzugsweise vom Sicherheitselement 14 in Schritt S3 von Figur 2 überprüft, ob die Sekundärsubskription 18 kompatibel mit der bereits auf dem Sicherheitselement 14 vorhandenen Primärsubskription 18a ist, d.h. ob der erfindungsgemäß in der Primärsubskription hinterlegte Satz von Regeln erlaubt, dass die Sekundärsubskription 18b neben der Primärsubskription 18a auf dem Sicherheitselement 14 eingesetzt werden kann. Diese Überprüfung könnte beispielsweise durch das SM Applet 16 auf dem Sicherheitselement 14 durchgeführt werden.

Falls dem so ist, lädt das Sicherheitselement 14 in Schritt S4 von Figur 2 die Sekundärsubskription 18b vom Hintergrundsystem 50 herunter und speichert diese in einem der dafür vorgesehenen Slots der Speichereinheit 17 des Sicherheitselements 14.

In Schritt S5 von Figur 2 kann sich das Sicherheitselement 14 nunmehr mit der vom Hintergrundsystem 50 heruntergeladenen Sekundärsubskription 18b in das PLMN 40 einbuchen, um über dieses zu kommunizieren.

Gemäß bevorzugter Ausführungsformen der Erfindung kann neben der Primärsubskription 18a keine weitere Primärsubskription auf dem Sicherheitselement eingesetzt werden.

Vorzugsweise kann der in der Primärsubskription 18a hinterlegte Satz von Regeln bestimmen, dass nur Sekundärsubskriptionen von bestimmten Netzbetreibern auf dem Sicherheitselement eingesetzt werden können. Beispielsweise kann es im Interesse des Betreibers des PLMN 30 liegen, dass das von ihm mit der Primärsubskription 18a ausgestattete Sicherheitselement 14 auch dazu verwendet werden kann, mittels der Sekundärsubskription 18b über das PLMN 40 zu kommunizieren.

Gemäß bevorzugter Ausführungsformen der Erfindung ist es ebenfalls denkbar, dass mit dem in der Primärsubskription 18a hinterlegten Satz von Regeln bestimmt werden kann, ob bestimmte Kombination von zwei oder Sekundärsubskriptionen auf dem Sicherheitselement 14 eingesetzt werden können. Beispielsweise kann der in der Primärsubskription 18a hinterlegte Satz von Regeln bestimmen, dass auf dem Sicherheitselement 14 nicht die Sekundärsubskription 18b zusammen mit der Sekundärsubskription 18c vorliegen kann.

Gemäß einer weiteren erfindungsgemäßen Variante ist es denkbar, dass neben der Primärsubskription 18a eine oder mehrere weitere Primärsubskriptionen auf dem Sicherheitselement vorhanden sind. Bei dieser Variante gilt der in der ersten Primärsubskription 18a hinterlegte Satz von Regeln nur für einen Teil der Sekundärsubskriptionen, beispielsweise die Sekundärsubskription 18b, und die jeweils in den weiteren Primärsubskriptionen hinterlegten Sätze von Regeln ebenfalls nur für einen Teil der Sekundärsubskriptionen, beispielsweise die Sekundärsubskription 18d.

## Patentansprüche

1. Verfahren zum Verwalten einer Vielzahl von Subskriptionen mit Subskriptionsberechtigungsdaten auf einem Sicherheitselement (14) eines mobilen Endgeräts (12) zum Einbuchen in ein jeweiliges Mobilfunknetz (30, 40), wobei das Sicherheitselement (14) eine Vielzahl von Speicherplätzen zum Speichern der Vielzahl von Subskriptionen (18a-d) aufweist, wobei die Vielzahl von Subskriptionen (18a-d) eine Primärsubskription (18a) und wenigstens eine Sekundärsubskription (18b-d) umfasst, wobei in der Primärsubskription (18a) ein Satz von Regeln hinterlegt ist, der bestimmt, ob die wenigstens eine Sekundärsubskription (18b-d) auf dem Sicherheitselement (14) eingesetzt werden kann, wobei neben der Primärsubskription (18a) wenigstens eine weitere Primärsubskription auf dem Sicherheitselement (14) eingesetzt werden kann und die Vielzahl von Subskriptionen (18a-d) wenigstens zwei Sekundärsubskriptionen (18b-d) umfassen, wobei der in der Primärsubskription (18a) hinterlegte Satz von Regeln nur für einen Teil der wenigstens zwei Sekundärsubskriptionen (18b-d) gilt und in der weiteren Primärsubskription ein Satz von Regeln hinterlegt ist, der bestimmt, ob eine Sekundärsubskription des anderen Teils der wenigstens zwei Sekundärsubskriptionen (18b-d) auf dem Sicherheitselement (14) eingesetzt werden kann.

2. Verfahren nach Anspruch 1, wobei die Primärsubskription (18a) neben den Subskriptionsberechtigungsdaten und dem Satz von Regeln wenigstens eine Applikation und/oder wenigstens einen Datensatz umfasst, wobei der in der Primärsubskription (18a) hinterlegte Satz von Regeln ferner bestimmt, ob die wenigstens eine Sekundärsubskription (18b-d) auf die wenigstens eine Applikation oder den wenigstens einen Datensatz der Primärsubskription (18a) zugreifen darf.

3. Verfahren nach Anspruch 1, wobei die Vielzahl von Subskriptionen (18a-d) wenigstens zwei Sekundärsubskriptionen (18b-d) umfassen und der in der Primärsubskription (18a) hinterlegte Satz von Regeln bestimmt, ob die Kombination der wenigstens zwei Sekundärsubskriptionen (18b-d) auf dem Sicherheitselement (14) eingesetzt werden kann.

4. Sicherheitselement (14) für ein mobiles Endgerät (12) mit einer Vielzahl von Speicherplätzen zum Speichern einer Vielzahl von Subskriptionen (18a-d) mit Subskriptionsberechtigungsdaten zum Einbuchen in ein jeweiliges Mobilfunknetz (30, 40), wobei die Vielzahl von Subskriptionen (18a-d) eine Primärsubskription (18a) und wenigstens eine Sekundärsubskription (18b-d) umfasst, wobei in der Primärsubskription (18a) ein Satz von Regeln hinterlegt ist, der bestimmt, ob die wenigstens eine Sekundärsubskription (18b-d) auf dem Sicherheitselement (14) eingesetzt werden kann, wobei das Sicherheitselement (14) derart ausgestaltet ist, dass neben der Primärsubskription (18a) wenigstens eine weitere Primärsubskription auf dem Sicherheitselement (14) eingesetzt werden kann und die Vielzahl von Subskriptionen (18a-d) wenigstens zwei Sekundärsubskriptionen (18b-d) umfassen, wobei der in der Primärsubskription (18a) hinterlegte Satz von Regeln nur für einen Teil der wenigstens zwei Sekundärsubskriptionen (18b-d) gilt und in der weiteren Primärsubskription ein Satz von Regeln hinterlegt ist, der bestimmt, ob eine Sekundärsubskription des anderen Teils der wenigstens zwei Sekundärsubskriptionen (18b-d) auf dem Sicherheitselement (14) eingesetzt werden kann.

5. Sicherheitselement (14) nach Anspruch 4, wobei die Primärsubskription (18a) neben den Subskriptionsberechtigungsdaten und dem Satz von Regeln wenigstens eine Applikation und/oder wenigstens einen Datensatz umfasst, wobei der in der Primärsubskription (18a) hinterlegte Satz von Regeln ferner bestimmt, ob die wenigstens eine Sekundärsubskription (18b-d) auf die wenigstens eine Applikation oder den wenigstens einen Datensatz der Primärsubskription (18a) zugreifen darf.

6. Sicherheitselement (14) nach Anspruch 4, wobei das Sicherheitselement (14) derart ausgestaltet ist, dass die Vielzahl von Subskriptionen (18a-d) wenigstens zwei Sekundärsubskriptionen (18b-d) umfassen und der in der Primärsubskription (18a) hinterlegte Satz von Regeln bestimmt, ob die Kombination der wenigstens zwei Sekundärsubskriptionen (18b-d) auf dem Sicherheitselement (14) eingesetzt werden kann.

7. Sicherheitselement (14) nach einem der Ansprüche 4 bis 6, wobei es sich bei dem Sicherheitselement (14) um ein SIM, eUICC/UICC oder M2M-Modul handelt.

8. Mobiles Endgerät (12) mit einem Sicherheitselement (14) nach einem der Ansprüche 4 bis 7.

## Claims

1. A method for managing a plurality of subscriptions with subscription authorization data on a security element (14) of a mobile end device (12) for logging into a respective mobile radio network (30, 40), wherein the security element (14) has a plurality of memory locations for storing the plurality of subscriptions (18a-d), wherein the plurality of subscriptions (18a-d) comprises a primary subscription (18a) and at least one secondary subscription (18b-d), wherein in the primary subscription (18a) there is deposited a set of rules which determines whether the at least one secondary subscription (18b-d) on the security element (14) can be used, wherein alongside the primary subscription (18a) at least one further primary subscription on the security element (14) can be used, and the plurality of subscriptions (18a-d) comprise at least two secondary subscriptions (18b-d), wherein the set of rules deposited in the primary subscription (18a) only holds for a portion of the at least two secondary subscriptions (18b-d), and in the further primary subscription there is deposited a set of rules which determines whether a secondary subscription of the other portion of the at least two secondary subscriptions (18b-d) on the security element (14) can be used.

2. The method according to claim 1, wherein the primary subscription (18a) comprises, alongside the subscription authorization data and the set of rules, at least one application and/or at least one data set, wherein the set of rules deposited in the primary subscription (18a) further determines whether the at least one secondary subscription (18b-d) may access the at least one application or the at least one data set of the primary subscription (18a).

3. The method according to claim 1, wherein the plurality of subscriptions (18a-d) comprise at least two secondary subscriptions (18b-d), and the set of rules deposited in the primary subscription (18a) determines whether the combination of the at least two secondary subscriptions (18b-d) on the security element (14) can be used.

4. A security element (14) for a mobile end device (12) with a plurality of memory locations for storing a plurality of subscriptions (18a-d) with subscription authorization data for logging into a respective mobile radio network (30, 40), wherein the plurality of subscriptions (18a-d) comprises a primary subscription (18a) and at least one secondary subscription (18b-d), wherein in the primary subscription (18a) there is deposited a set of rules which determines whether the at least one secondary subscription (18b-d) on the security element (14) can be used. wherein the security element (14) is configured such that alongside the primary subscription (18a) at least one further primary subscription on the security element (14) can be used, and the plurality of subscriptions (18a-d) comprise at least two secondary subscriptions (18b-d), wherein the set of rules deposited in the primary subscription (18a) only holds for a portion of the at least two secondary subscriptions (18b-d), and in the further primary subscription there is deposited a set of rules which determines whether a secondary subscription of the other portion of the at least two secondary subscriptions (18b-d) on the security element (14) can be used.

5. The security element (14) according to claim 4, wherein the primary subscription (18a) comprises, alongside the subscription authorization data and the set of rules, at least one application and/or at least one data set, wherein the set of rules deposited in the primary subscription (18a) further determines whether the at least one secondary subscription (18b-d) may access the at least one application or the at least one data set of the primary subscription (18a).

6. The security element (14) according to claim 4, wherein the security element (14) is configured such that the plurality of subscriptions (18a-d) comprise at least two secondary subscriptions (18b-d), and the set of rules deposited in the primary subscription (18a) determines whether the combination of the at least two secondary subscriptions (18b-d) on the security element (14) can be used.

7. The security element (14) according to any of claims 4 to 6, wherein the security element (14) is a SIM, eUICC/UICC or M2M module.

8. A mobile end device (12) having a security element (14) according to any of claims 4 to 7.

## Revendications

1. Procédé de gestion d'une pluralité d'abonnements ayant des données d'autorisation d'abonnement sur un élément de sécurité (14) d'un terminal mobile (12) pour le reliement à un réseau radio mobile respectif (30, 40), cependant que l'élément de sécurité (14) comporte une pluralité d'espaces mémoire pour la mémorisation de la pluralité d'abonnements (18a-d), cependant que la pluralité d'abonnements (18a-d) comprend un abonnement primaire (18a) et au moins un abonnement secondaire (18b-d), cependant qu'un jeu de règles qui détermine si le au moins un abonnement secondaire (18b-d) sur l'élément de sécurité (14) peut être utilisé est enregistré dans l'abonnement primaire (18a), cependant que, en plus de l'abonnement primaire (18a), au moins un autre abonnement primaire sur l'élément de sécurité (14) peut être utilisé et que la pluralité d'abonnements (18a-d) comprennent au moins deux abonnements secondaires (18b-d), cependant que le jeu de règles enregistré dans l'abonnement primaire (18a) n'est valable que pour une partie des au moins deux abonnements secondaires (18b-d) et que, dans l'autre abonnement primaire, un jeu de règles est enregistré qui détermine si un abonnement secondaire de l'autre partie des au moins deux abonnements secondaires (18b-d) sur l'élément de sécurité (14) peut être utilisé.

2. Procédé selon la revendication 1, cependant que l'abonnement primaire (18a) comprend, en plus des données d'autorisation d'abonnement et du jeu de règles, au moins une application et/ou au moins un jeu de données, cependant que le jeu de règles enregistré dans l'abonnement primaire (18a) détermine en outre si le au moins un abonnement secondaire (18b-d) a le droit d'accéder à la au moins une application et/ou au au moins un jeu de données de l'abonnement primaire (18a).

3. Procédé selon la revendication 1, cependant que la pluralité d'abonnements (18a-d) comprennent au moins deux abonnements secondaires (18b-d) et que le jeu de règles enregistré dans l'abonnement primaire (18a) détermine si la combinaison des au moins deux abonnements secondaires (18b-d) peut être utilisée sur l'élément de sécurité (14).

4. Elément de sécurité (14) destiné à un terminal mobile (12) ayant une pluralité d'espaces mémoire pour la mémorisation d'une pluralité d'abonnements (18a-d) ayant des données d'autorisation d'abonnement pour le reliement à un réseau radio mobile respectif (30, 40), cependant que la pluralité d'abonnements (18a-d) comprend un abonnement primaire (18a) et au moins un abonnement secondaire (18b-d), cependant que, un jeu de règles qui détermine si le au moins un abonnement secondaire (18b-d) sur l'élément de sécurité (14) peut être utilisé est enregistré dans l'abonnement primaire (18a), cependant que l'élément de sécurité (14) est conçu de telle façon que, en plus de l'abonnement primaire (18a), au moins un autre abonnement primaire sur l'élément de sécurité (14) peut être utilisé et que la pluralité d'abonnements (18a-d) comprennent au moins deux abonnements secondaires (18b-d), cependant que le jeu de règles enregistré dans l'abonnement primaire (18a) n'est valable que pour une partie des au moins deux abonnements secondaires (18b-d) et que, dans l'autre abonnement primaire, un jeu de règles est enregistré qui détermine si un abonnement secondaire de l'autre partie des au moins deux abonnements secondaires (18b-d) sur l'élément de sécurité (14) peut être utilisé.

5. Elément de sécurité (14) selon la revendication 4, cependant que l'abonnement primaire (18a) comprend, en plus des données d'autorisation d'abonnement et du jeu de règles, au moins une application et/ou au moins un jeu de données, cependant que le jeu de règles enregistré dans l'abonnement primaire (18a) détermine en outre si le au moins un abonnement secondaire (18b-d) a le droit d'accéder à la au moins une application et/ou au au moins un jeu de données de l'abonnement primaire (18a).

6. Elément de sécurité (14) selon la revendication 4, cependant que l'élément de sécurité (14) est conçu de telle façon que la pluralité d'abonnements (18a-d) comprennent au moins deux abonnements secondaires (18b-d) et que le jeu de règles enregistré dans l'abonnement primaire (18a) détermine si la combinaison des au moins deux abonnements secondaires (18b-d) peut être utilisée sur l'élément de sécurité (14).

7. Elément de sécurité (14) selon une des revendications de 4 à 6, cependant que l'élément de sécurité (14) consiste en une SIM, eUICC/UICC ou en un module M2M.

8. Terminal mobile (12) ayant un élément de sécurité (14) selon une des revendications de 4 à 7.
